# EUROPÄISCHE PATENTSCHRIFT

(11) **EP 0 861 429 B1**
(45) Veröffentlichungstag und Bekanntmachung des Hinweises auf die Patenterteilung: **06.11.2002**
(21) Anmeldenummer: 96934382.1
(22) Anmeldetag: 27.08.1996
(51) Int. Cl.: G01M 3/36

(54) **VORRICHTUNG ZUR ÜBERPRÜFUNG DER DICHTIGKEIT VON SCHLAUCHBEUTELPACKUNGEN**
DEVICE FOR CHECKING THE SEAL OF FLOW-WRAPPED PACKAGES
DISPOSITIF DE CONTROLE D'ETANCHEITE D'EMBALLAGES TUBULAIRES

(30) Priorität: 15.11.1995 DE 19542651
(43) Veröffentlichungstag der Anmeldung: 02.09.1998
(73) Patentinhaber: ROBERT BOSCH GMBH, 70442 Stuttgart (DE)
(72) Erfinder: MARTIN, Wolfgang, D-71364 Winnenden (DE)
(86) Internationale Anmeldenummer: DE9601585
(87) Internationale Veröffentlichungsnummer: WO97018453

(56) Entgegenhaltungen:
- EP-A- 0 540 148
- WO-A-93/18969
- DE-A- 4 004 965
- PATENT ABSTRACTS OF JAPAN vol. 4, no. 47 (P-006), 11.April 1980 & JP,A,55 018939 (YOSHIZAKI HISAICHI), 9.Februar 1980,

## Beschreibung

### Stand der Technik

Die Erfindung geht aus von einem Verfahren zur Überprüfung der Dichtigkeit von Schlauchbeutelpackungen nach der Gattung des Anspruchs 1. Bei einem bekannten Verfahren dieser Art wird eine auf einem Förderband flachliegende Schlauchbeutelpackung mit einem in einer Achse drehbar gelagerten Gurtförderer belastet, der während der Förderung der Schlauchbeutelpackung durch diese nach oben weggedrückt wird. Bei einer undichten Schlauchbeutelpackung drückt das Gewicht des Gurtförderers die Schlauchbeutelpackung so weit zusammen, daß die Auslenkung des Gurtförderers einen vorgegebenen Grenzwert unterschreitet. Der Grenzwert wird mit Hilfe eines mechanischen Anschlags am Gurtförderer eingestellt. Die Abtastung des Ist-Wertes erfolgt mittels elektrischer Schalter. Unterschreitet der Ist-Wert den Grenzwert, so wird die als undicht erkannte Schlauchbeutelpackung auf ihrem weiteren Förderweg ausgeschleust.

Das Maß für die Auslenkung des Gurtförderers ist unter anderem von dem Befüllungsgrad und den Abmessungen der Schlauchbeutelpackung abhängig. Zusätzlich schwankt der Befüllungsgrad der Schlauchbeutelpackung bei vorgegebenem Füllgewicht entsprechend der Dichte des Füllguts, die sich bsw. von einer zur nächsten Füllgutcharge ändern kann. Das bekannte verfahren arbeitet aufgrund der oben angeführten Schwankungen relativ ungenau. Es lassen sich je nachdem, wie der Grenzwert eingestellt ist, entweder nur stark undichte Schlauchbeutelpackungen erkennen, oder es werden auch dichte Schlauchbeutelpackungen als undicht ausgeschleust. Wünschenswert wäre dagegen ein Verfahren, das die o.g. Schwankungen berücksichtigt, so daß nur tatsächlich undichte Schlauchbeutelpackungen ausgeschleust werden. Außerdem sollte auch eine geringe Undichtigkeit an einer Schlauchbeutelpackung sicher erkannt werden können.

### Vorteile der Erfindung

Die erfindungsgemäße Vorrichtung zur Überprüfung der Dichtigkeit von Schlauchbeutelpackungen wird in Anspruch 1 definiert. Diese Vorrichtung behandelt die Schlauchbeutelpackungen besonders schonend, wenn diese durch ein als Gurtförderer ausgebildetes Höhentastband belastet werden, da dann keine oder nur geringe Relativgeschwindigkeiten zwischen der Oberseite der Schlauchbeutelpackung und der Unterseite des Höhentastbands auftreten. Vorteilhaft ist durch die Ausbildung des Höhentastbands zudem, daß verschiedene Schlauchbeutelpackungsformate geprüft werden können, ohne die mechanische Einstellung des Höhentastbands verändern zu müssen.

In einer bevorzugten Ausführungform ist dem Einlaufband ein aus zwei Gurtförderern bestehendes Egalisierband vorgeschaltet, so daß die Schlauchbeutelpackungen auch dort schonend behandelt werden.

### Zeichnung

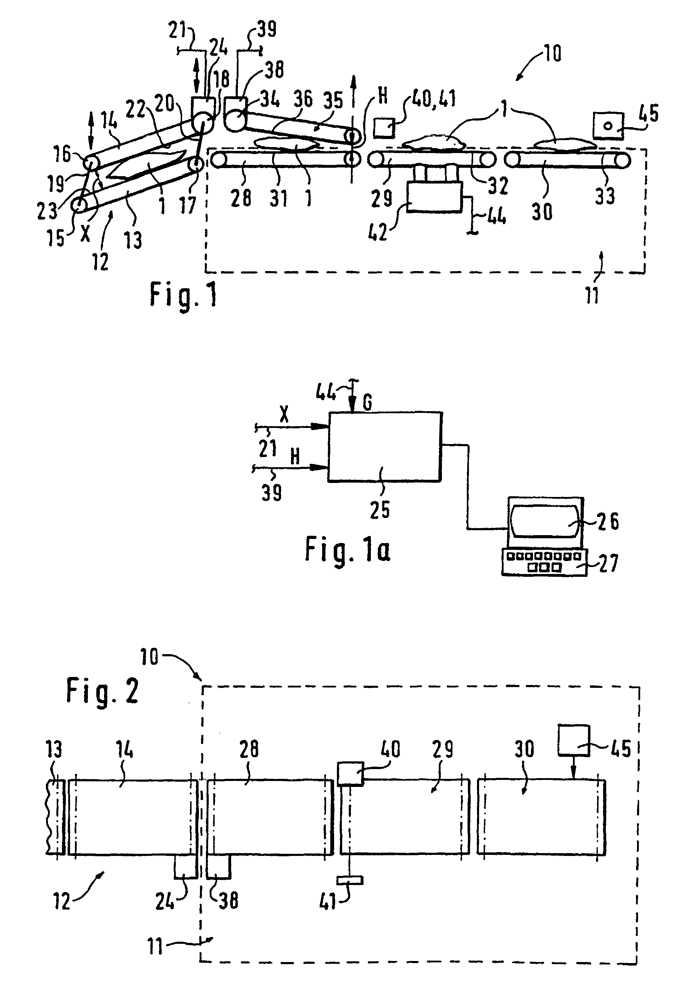

Ein Ausführungsbeispiel der Erfindung ist in der Zeichnung dargestellt und wird in der nachfolgenden Beschreibung näher erläutert. Figur 1 zeigt eine Vorrichtung zur Überprüfung der Dichtigkeit von Schlauchbeutelpackungen in einer vereinfachten Seitenansicht, und die Figur 2 die Vorrichtung nach Figur 1 in Draufsicht.

### Beschreibung des Ausführungsbeispiels

Die Vorrichtung 10 zur Überprüfung der Dichtigkeit von Schlauchbeutelpackungen 1 besteht aus einer Bandkontrollwaage 11 und einem vorgeschalteten, mit einer nicht dargestellten Vibrationseinrichtung verbundenen Egalisierband 12. Das vorzugsweise kontinuierlich angetriebene Egalisierband 12 hat zwei übereinander angeordnete Gurtförderer 13, 14, deren jeweils vordere beziehungsweise hintere Rollen 15, 16; 17, 18 mittels Stäben 19, 20 gelenkig miteinander verbunden sind. Bei einer Verschiebung des oberen Gurtförderers 14 in Richtung zur Bandkontrollwaage 11 verringert sich der Abstand X zwischen dem unteren Gurttrum 22 des oberen Gurtförderers 14 und dem oberen Gurttrum 23 des unteren Gurtförderers 13. Die Länge der Stäbe 19, 20 ist dabei so ausgebildet, daß entweder das obere Gurttrum 23 des Gurtförderers 13 parallel zum unteren Gurttrum 22 des Gurtförderers 14 verläuft, oder derart, daß sich der Abstand X zwischen den Gurttrumen 22, 23 in Richtung zur Bandkontrollwaage 11 hin verringert. Die Neigung des einen Stabes 20 ist mittels einer Einstelleinrichtung 24 erfass- und veränderbar, wobei die Einstelleinrichtung 24 über eine Leitung 21 mit der Steuereinrichtung 25 der Vorrichtung 10 verbunden ist. Die Steuereinrichtung 25 ist mit einem Monitor 26 und einem Einund Ausgabeterminal 27 gekoppelt.

Auf dem Gestell der Bandkontrollwaage 11 sind in Förderrichtung der Schlauchbeutelpackungen 1 betrachtet ein Einlaufband 28, ein Wägeband 29 und ein Auslaufband 30 angeordnet, die jeweils als Gurtförderer ausgebildet und kontinuierlich angetrieben sind, und deren obere Gurttrume 31, 32, 33 eine Förderebene für die Schlauchbeutelpackungen 1 bilden. Oberhalb des Einlaufbandes 28 befindet sich ein in einer Achse 34 drehbar gelagertes Höhentastband 35, das ebenfalls als Gurtförderer ausgebildet ist. Das Höhentastband 35 ist derart angeordnet, daß der Abstand H seines unteren Gurttrums 36 in Förderrichtung der Schlauchbeutelpackungen 1 betrachtet zum Einlaufband 28 hin abnimmt, wobei der geringste Abstand geringer ist als die Höhe einer Schlauchbeutelpackung 1. Die Neigung des Höhentastbands 35 zum Einlaufband 28 ist mittels einer in der Achse 34 angeordneten Meßeinrichtung 38 erfassbar. Die Meßeinrichtung 38 ist über eine zweite Leitung 39 mit der Steuereinrichtung 25 der Vorrichtung 10 verbunden.

Im Einlaufbereich des Wägebands 29 ist eine Lichtschranke 40 mit einem Reflektor 41 zum Erkennen einlaufender Schlauchbeutelpackungen 1 angeordnet. Das Wägeband 29 ruht auf einem Sockel 42, in dem nicht dargestellte Einrichtungen zum Erfassen des Gewichts des Wägebands 29 angeordnet sind. Mittels dieser Einrichtungen wird jeweils das Gewicht des Wägebands 29 und einer darauf geförderten Schlauchbeutelpackung 1 erfasst, und über eine Leitung 44 der Steuereinrichtung 25 als Eingangsgröße zugeführt.

Dem an das Wägeband 29 anschließende Auslaufband 30 ist ein von der Steuereinrichtung 25 ansteuerbarer Ausblaskopf 45 zugeordnet. Der Ausblaskopf 45 dient zum Aussondern undichter Schlauchbeutelpackungen 1, oder solcher Schlauchbeutelpackungen 1, deren Gewicht vom Wägeband 29 als außerhalb vorgegebener Toleranzen erfasst wurde.

Die oben beschriebene Vorrichtung 10 zur Überprüfung der Dichtigkeit von Schlauchbeutelpackungen 1 arbeitet wie folgt: Die mittels an sich bekannter Schlauchbeutelmachinen teilweise mit einem Füllgut befüllten und gesiegelten Schlauchbeutelpackungen 1 werden der Vorrichtung 10 über das Egalisierband 12 flachliegend zugeführt. Das Egalisierband 12 dient mittels der mit ihm verbundenen Vibrationseinrichtung dazu, das Produkt in der Schlauchbeutelpackung 1 gleichmäßig zu verteilen. Weiterhin werden eventuelle Produktanhäufungen, wie sie durch den vorhergegangenen Füllvorgang in der Schlauchbeutelmaschine möglich sind, aufgelöst. Durch den oberen Gurtförderer 14 des Egalisierbands 12 werden die Schlauchbeutelpackungen 1 zusammengepresst, damit Luft durch eventuell vorhandene undichte Stellen, die insbesondere in deren Nahtbereichen auftreten können, herausgepresst wird. Der zum Zusammenpressen der Schlauchbeutelpackungen 1 notwendige, u.a. von der Größe der Schlauchbeutelpackung 1 sowie dem Füllgrad abhängige Abstand X zwischen dem unteren Gurttrum 22 des Gurtförderers 14 und dem oberen Gurttrum 23 des Gurtförderers 13 wird mittels der Einstelleinrichtung 24 eingestellt. Damit jede einlaufende Schlauchbeutelpackung 1 vom Gurtförderer 14 mit der gewünschten Kraft belastet wird, ist es erforderlich, daß die flachliegenden Schlauchbeutelpackungen 1 einen gewissen Abstand in Förderrichtung voneinander aufweisen.

Vom Egalisierband 12 gelangen die Schlauchbeutelpackungen 1 auf das Einlaufband 28. Dadurch, daß, in Förderrichtung der Schlauchbeutelpackung 1 betrachtet, sich der Abstand H zwischen dem Einlaufband 28 und dem Höhentastband 35 verringert, gelangt die Schlauchbeutelpackung 1 im weiteren Verlauf zwischen das Einlaufband 28 und das Höhentastband 35. Die durch das Höhentastband 35 belastete Schlauchbeutelpackung 1 lenkt das Höhentastband 35 nach oben aus, wobei es in der Achse 34 geschwenkt wird. Da in der Regel das Gewicht des lediglich in der Achse 34 gelagerten Höhentastbands 35 so hoch ist, daß es zu einer Beschädigung bzw. zum Aufplatzen einer von ihm belasteten Schlachbeutelpackung 1 können würde, ist das Höhentastband 35 bsw. auf dem der Achse 34 gegenüberliegenden Ende entlastet, was zum Beispiel durch eine entsprechend angeordnete, nicht dargestellte Feder/Dämpferkombination erfolgen kann. Alternativ dazu ist in der Achse 34 selbst eine entsprechende Einrichtung vorgesehen. Der Wert der maximalen Auslenkung H (max) des Höhentastbands 35 aufgrund der Schlauchbeutelpackung 1, der von der Meßeinrichtung 38 erfasst und der Steuereinrichtung 25 als Eingangsgröße zugeführt wird, ist direkt von der Höhe der Schlauchbeutelpackung 1 abhängig, die sich zwischen ihrer Unterseite und ihrer Oberseite einstellt, wenn das in der Schlauchbeutelpackung 1 vorhandene Luftpolster von dem Höhentastband 35 komprimiert wird. Bei dichten Schlauchbeutelpackungen 1 nimmt die Auslenkung H (max) einen Maximalwert ein. Bei stark undichten Schlauchbeutelpackungen 1 wurde die Luft bereits durch das dem Einlaufband 28 vorgeschaltete Egalisierband 12 aus der Schlauchbeutelpackung 1 vollständig herausgepresst. Das bedeutet, daß das Höhentastband 35 auf dem durch das Egalisierband 12 gleichmäßig flach verteilte Füllgut in der Schlauchbeutelpackung aufliegt. Die Auslenkung H (max) des Höhentastbands 35 in der Achse 34 erfolgt deshalb allein durch das Füllgut, sie nimmt infolge dessen ein Minimum an.

Bei geringen Undichtigkeiten der Schlauchbeutelpackung 1 wird durch das Egalisierband 12 lediglich ein geringer Teil der Luft aus der Schlauchbeutelpackung 1 herausgepresst. Weiteres Luftvolumen entweicht durch die Belastung durch das Höhentastband 35 aus der Schlauchbeutelpackung 1, so daß die Auslenkung H (max) des Höhentastbands 35 einen Zwischenwert annimmt. Das Egalisierband 12 dient somit auch dazu, insbesondere bei nur geringen Undichtigheiten der Schlauchbeutelpackung 1 das Meßergebnis H (max) durch das Höhentastband 35 zu verstärken, indem bereits vor der eigentlichen Messung durch das Höhentastband 35 Luft aus der Schlauchbeutelpackung 1 herausgepresst wird. Dies ist insbesondere deshalb von Bedeutung, da für den Transport der Schlauchbeutelpackung 1 auf dem Einlaufband 28 nur eine bestimmte Zeitdauer zur Verfügung steht. Durch das Egalisierband 12 kann somit ggf. die Leistung der Vorrichtung 10 erhöht werden, da zum Erkennen einer Undichtigkeit die Schlauchbeutelpackung 1 durch das Höhentastband 35 nur eine verhältnismäßig kurze Zeitdauer belastet werden muß. Die Fördergeschwindigkeit des Einlaufbands 28 kann deshalb relativ hoch gewählt werden.

Wird aufgrund des Meßsignals der Auslenkung H (max) der Meßeinrichtung 38, wie später noch näher erläutert, eine Schlauchbeutelpackung 1 als undicht definiert, so wird diese, nachdem sie das Wägeband 29 passiert hat, auf dem Auslaufband 30 durch den von der Steuereinrichtung 25 ansteuerbaren Ausblaskopf 45 ausgeschieden. Vorzugsweise wird das Gewicht dieser Schlauchbeutelpackung 1 zuvor nicht durch das Wägeband 29 erfasst. Die als undicht definierte Schlauchbeutelpackung 1 wird vom Wägeband 30 durch die Lichtschranke 40 erfasst. Das Unterdrücken des Gewichtswerts der undichten Schlauchbeutelpackung 1 erfolgt deshalb, da nicht ausgeschlossen werden kann, daß durch die vorhergehende mechanische Belastung durch das Egalisierband 12 und das Höhentastband 35 zumindest geringe Mengen an Füllgut aus der Schlauchbeutelpackung 1 ausgetreten sind. Da die Gewichtswerte der befüllten Schlauchbeutelpackungen 1 aus statistischen bzw. regelungstechnischen Gründen bsw. einer der Vorrichtung 10 vorgeschalteten Dosiereinrichtung von der Steuereinrichtung 25 erfasst und ausgewertet werden, muß vermieden werden, daß undichte Schlauchbeutelpackungen 1 als solche Schlauchbeutelpackungen 1 erkannt werden, deren Füllgewicht zu gering ist.

Die Auslenkung H (max) des Höhentastbands 35 wird der Steuereinrichtung 25 über die Meßeinrichtung 38 üblicherweise kontinuierlich, bsw. alle 10 ms als Eingangsgröße zugeführt. Der Maximalwert H (max) der Auslenkung wird als Kriterium für die Dichtheit bewertet. Unterschreitet der Maximalwert H (max) einen vorgegebenen Grenzwert H (min), wird die Schlauchbeutelpackung 1 als undicht betrachtet. Der Mittelwert H (Mittelwertdicht) der Höhen bzw. der Auslenkungen am Höhentastband 35 der als dicht betrachteten Schlauchbeutelpackungen 1 wird laufend neu gebildet. Treten Abweichungen im Mittelwert H (Mittelwertdicht) auf, wird die Grenze H (min) zwischen dichten und undichten Schlauchbeutelpackungen 1 automatisch entsprechend dieser Abweichung korrigiert (automatische Grenzwertnachführung). Es können somit sich kontinuierlich ändernde Parameter, wie sie bsw. durch Füllgutdichteschwankungen oder sich in der Größe geringfügig ändernde Schlachbeutelpackungen 1 ergeben, ausgeglichen werden. Daraus folgt, daß der Abstand der Höhen bzw. der Auslenkung H (max) des Höhentastbands 35 von dichten Schlauchbeutelpackungen 1 zu dem aktuellen Grenzwert H (min) für undichte Schlauchbeutelpackungen 1 automatisch konstant bleibt.

Das Festlegen des Grenzwerts H (min) für die Auslenkung des Höhentastbands 35 bei undichten Schlauchbeutelpackungen 1 beim erstmaligen Betrieb mit neuen Schlauchbeutelpackungen 1 erfolgt bevorzugt mittels dichter und undichter Musterbeutel. Der Mittelwert der durch die dichten Musterbeutel hervorgerufenen Auslenkungen H am Höhentastband 35 wird von der Steuereinrichtung 25 errechnet und gespeichert. Anschließend wird die Vorrichtung 10 mit Musterbeuteln mit definierter Undichtheit betrieben. Wie bei den dichten Musterbeuteln wird auch hier der Mittelwert der Auslenkungen H am Höhentastband 35 von der Steuereinrichtung 25 errechnet und gespeichert. Die Steuereinrichtung 25 errechnet nun automatisch den Grenzwert für undichte Schlauchbeutelpackungen 1 nach der Formel: H(Grenz) = H(min) = (H Mittelwertdicht + H Mittelwertundicht)/2. Der errechnete Grenzwert H(min) wird in der Steuereinrichtung 25 für die zu verarbeitende Art von Schlauchbeutelpackungen 1 abgespeichert, und kann jederzeit abgerufen werden.

Weiterhin muß der Abstand X zwischen den Gurtförderern 13, 14 des Egalisierbands 12 eingestellt werden. Dies erfolgt über die Einstelleinrichtung 24. Diese ist für den erstmaligen Betrieb mit neuen Schlauchbeutelpackungen 1 derart einzustellen, daß zum einen eine gleichmäßige Verteilung des Produkts in der Schlauchbeutelpackung 1 erfolgt. Zum ändern darf der Abstand X nicht so gering sein, daß Schlauchbeutelpackungen 1 beschädigt oder vorgeschädigt werden. Stehen der Abstand X für die Einstellung des Egalisierbands 12 und die Werte H (min) und H (max) fest, so können diese von der Steuereinrichtung 25 abgespeichert werden. Dies hat den Vorteil, daß beim erneuten Betrieb der Vorrichtung 10 mit diesen Schlauchbeutelpackungen 1 die Umrüstzeiten minimiert werden, da dann lediglich noch der Abstand X zwischen den Gurtförderern 13, 14 am Egalisierband 12 mittels der Einstelleinrichtung 24 eingestellt werden muß.

Zusätzlich wird erwähnt, daß die Steuereinrichtung 25 der Vorrichtung 10 zusätzliche Optionen enthält, um den sicheren Betrieb der Vorrichtung 10 zu gewährleisten. Dazu gehören bsw. eine ständige Überprüfung der korrekten Einstellung des Egalisierbands 12 oder der Beweglichkeit des Höhentastbands 35 anhand der eingelesenen Werte der Meßeinrichtung 38. Als Beispiel sei angeführt, daß die Steuereinrichtung 25 aus einer vorher über das Ein- und Ausgabeterminal 27 eingegebenen Packungslänge der Schlauchbeutelpackung 1 und der Fördergeschwindigkeit des Einlaufbands 28 ein Meßfenster ermittelt, in dem sich ändernde Meßwerte für die Auslenkung des Höhentastbands 35 einstellen müssen. Ist bsw. das Höhentastband 35 mechanisch blockiert oder so hoch eingestellt, daß die Schlauchbeutelpackungen 1 das Einlaufband 28 durchlaufen, ohne das Höhentastband 35 auszulenken, so bleiben die Meßwerte bsw. stets konstant. Sollten derartige Meßwerte von der Steuereinrichtung 25 erfasst werden, wird der Betrieb der Vorrichtung 10 automatisch unterbrochen, bzw. es wird eine Fehlermeldung erzeugt, die über das Ein- und Ausgabeterminal 27 ausgegeben werden kann. Weiterhin können über das Ein- und Ausgabeterminal 27 bsw. die aktuellen Einstell- und Meßwerte, sowie statistische Daten ausgegeben, und bsw. in Form von Balkendiagrammen, Zahlenwerten usw. dargestellt werden.

Weiterhin ist zu erwähnen, daß die Detailkonstruktion der Vorrichtung vom beschriebenen Ausführungsbeispiel abweichen kann. So ist es bsw. denkbar, die Einstelleinrichtung 24 am Gurtförderer 13 bzw. an dessen Rolle 17 anzuordnen, wobei der Gurtförderer 14 über ein entsprchendes Gestänge an der Einstelleinrichtung 24 bzw. am Gurtförderer 13 befestigt ist.

## Patentansprüche

1. Vorrichtung (10) zur Überprüfung der Dichtigkeit von Schlauchbeutelpackungen (1), mit einer die Schlauchbeutelpackungen (1) transportierenden Fördereinrichtung (28), oberhalb deren Förderebene (32) ein Gurtförderer (35) angeordnet ist, dessen den Schlauchbeutelpackungen (1) zugewandtes Gurttrum (36) die Oberseite der Schlauchbeutelpackungen (1) belastet, wobei eine Einrichtung vorhander ist, die die Auslenkung des Gurttrums (36) erfaßt und einer Steuereinrichtung (25) zuführt, die anhand der Auslenkung des Gurttrums (36) undichte Schlauchbeutelpackungen (1) erkennt, **dadurch gekennzeichnet, daß** der Gurtförderer (35) in einer Achse (34) drehbar gelagert ist und daß der Abstand (H) des Gurttrums (36) zur Fördereinrichtung (28) in Förderrichtung der Schlauchbeutelpackungen (1) stetig abnimmt und in seiner Ruhelage einen Wert einnimmt, der geringer ist als die Höhe einer auf der Fördereinrichtung (28) geförderten Schlauchbeutelpackung (1).

2. Vorrichtung nach Anspruch 1, **dadurch gekennzeichnet, daß** der Fördereinrichtung (28) eine Einrichtung (12) zur mechanischen Belastung der Oberseite von Schlauchbeutelpackungen (1) vorgeschaltet ist.

3. Vorrichtung nach Anspruch 2, **dadurch gekennzeichnet, daß** die Einrichtung (12) mit einer Vibrationseinrichtung gekoppelt ist.

4. Vorrichtung nach Anspruch 2 oder 3, **dadurch gekennzeichnet, daß** die Einrichtung (12) aus zwei übereinander angeordneten Gurtförderern (13, 14) besteht, deren gegenseitiger Abstand (X) zumindest an einer Stelle geringer ist als die Höhe einer unbelasteten Schlauchbeutelpackung (1).

5. Vorrichtung nach Anspruch 4, **dadurch gekennzeichnet, daß** die beiden Gurtförderer (13, 14) mittels wenigstens eines Verbindungselements (19, 20) miteinander verbunden sind, daß die Stellung des Verbindungselements (19, 20) mittels einer Einstelleinrichtung (24) veränderbar ist und daß die Einstelleinrichtung (24) mit der Steuereinrichtung (25) der Vorrichtung (10) verbunden ist.

6. Vorrichtung nach einem der Ansprüche 1 bis 5, **dadurch gekennzeichnet, daß** der Fördereinrichtung (28) ein Wägeband (30) nachgeschaltet ist, in dessen Einlaufbereich eine Einrichtung (40) zum Erkennen auf das Wägeband (30) einlaufender Schlauchbeutelpackungen (1) angeordnet ist und daß die Einrichtung (40) mit der Steuereinrichtung (25) gekoppelt ist.

## Claims

1. Apparatus (10) for checking the sealing of tubular bag packs (1), having a conveying arrangement (28) which transports the tubular bag packs (1) and above the conveying plane (32) of which there is arranged a belt conveyor (35), of which the belt strand (36), which is directed towards the tubular bag packs (1), subjects the top side of the tubular bag packs (1) to loading, an arrangement being provided which senses the deflection of the belt strand (36) and feeds this to a control arrangement (25), which detects unsealed tubular bag packs (1) by way of the deflection of the belt strand (36), **characterized in that** the belt conveyor (35) is mounted rotatably on a spindle (34), and **in that** the spacing (H) between the belt strand (36) and the conveying arrangement (28) decreases continuously in the conveying direction of the tubular bag packs (1) and, in the rest position of the same, assumes a value which is smaller than the height of a tubular bag pack (1) conveyed on the conveying arrangement (28).

2. Apparatus according to Claim 1, **characterized in that** the conveying arrangement (28) has arranged upstream of it an arrangement (12) for subjecting the top side of tubular bag packs (1) to mechanical loading.

3. Apparatus according to Claim 2, **characterized in that** the arrangement (12) is coupled to a vibration arrangement.

4. Apparatus according to Claim 2 or 3, **characterized in that** the arrangement (12) comprises two belt conveyors (13, 14) which are arranged one above the other and the spacing (X) between which is smaller, at least at one location, than the height of a non-loaded tubular bag pack (1).

5. Apparatus according to Claim 4, **characterized in that** the two belt conveyors (13, 14) are connected to one another by means of at least one connecting element (19, 20), **in that** the position of the connecting element (19, 20) can be changed by means of an adjusting arrangement (24), and **in that** the adjusting arrangement (24) is connected to the control arrangement (25) of the apparatus (10).

6. Apparatus according to one of Claims 1 to 5, **characterized in that** the conveying arrangement (28) has arranged downstream of it a weighing belt (30), in the inlet region of which there is arranged an arrangement (40) for detecting tubular bag packs (1) running onto the weighing belt (30), and **in that** the arrangement (40) is coupled to the control arrangement (25).

## Revendications

1. Dispositif de contrôle de l'étanchéité d'emballages tubulaires (1) comprenant
une installation de transport (28) transportant des emballages tubulaires (1) et au-dessus de son plan de transport (32), un convoyeur à bande (35) dont le brin (36) tourné vers les emballages tubulaires (1) sollicite la face supérieure des emballages tubulaires (1),
une installation détectant le débattement du brin (36) et transmettant ce débattement à une installation de commande (25) qui à l'aide du débattement du brin (36) reconnaît des emballage tubulaire (1) non étanches,
**caractérisé en ce que**
le convoyeur à bande (35) est monté à rotation suivant un axe (34) et
la distance (H) du brin (36) par rapport à l'installation de transport (28) diminue en continu dans la direction de transport des emballages tubulaires (1) et en position de repos cette distance prend une valeur inférieure à la hauteur d'un emballage tubulaire (1) transporté par l'installation de transport (28).

2. Dispositif selon la revendication 1,
**caractérisé en ce que**
l'installation de transport (28) est précédée d'une installation (12) pour solliciter mécaniquement la face supérieure des emballages tubulaires (1).

3. Dispositif selon la revendication 2,
**caractérisé en ce que**
l'installation (12) est couplée à un vibreur.

4. Dispositif selon l'une quelconque des revendications 2 ou 3,
**caractérisé en ce que**
l'installation (12) est formée de deux convoyeurs à bande (13, 14) superposés dont la distance réciproque (X) est au moins à un endroit inférieure à la hauteur d'un emballage tubulaire (1), non chargé.

5. Dispositif selon la revendication 4,
**caractérisé en ce que**
les deux convoyeurs à bande (13, 14) sont reliés par au moins un élément de liaison (19, 20), la position de l'élément de liaison (19, 20) peut être modifiée par une installation de réglage (24) et
l'installation de réglage (24) est reliée à l'installation de commande (25) du dispositif (10).

6. Dispositif selon l'une quelconque des revendications 1 à 5,
**caractérisé en ce que**
l'installation de transport (28) est suivie par une bande de pesée (30) dont la zone d'entrée comprend une installation (40) pour reconnaître des emballages tubulaires (1) arrivant sur la bande de pesée (30) et l'installation (40) est couplée à l'installation de commande (25).
